# EUROPÄISCHE PATENTSCHRIFT

(11) **EP 1 514 467 B1**
(45) Veröffentlichungstag und Bekanntmachung des Hinweises auf die Patenterteilung: **07.11.2007**
(21) Anmeldenummer: 04103319.2
(22) Anmeldetag: 13.07.2004
(51) Int. Cl.: A01F 12/18

(54) **Befestigungsmechanismus zur Anbringung eines Rosts an einer Erntegutbearbeitungseinheit**
Mechanism for fixing a grid to a crop processing unit
Mécanisme de fixation pour fixer une grille à une unité de traitement de récolte

(30) Priorität: 17.07.2003 US 621665
(43) Veröffentlichungstag der Anmeldung: 16.03.2005
(73) Patentinhaber: DEERE & COMPANY, Moline, Illinois 61265-8098 (US)
(72) Erfinder: Puryk, Corwin Marcus, 61244, East Moline, Illinois 61244 (US); Heim, Daniel Mark, 61265, Moline, Illinois 61265 (US)
(74) Vertreter: Holst, Sönke

(56) Entgegenhaltungen:
- FR-A- 1 541 528
- US-A- 4 499 908

## Beschreibung

Die Erfindung betrifft einen Befestigungsmechanismus zur Anbringung eines Rosts, insbesondere eines Dreschkorbs, an einer Erntegutbearbeitungseinheit, mit einem Trägerbalken, der sich entlang der Erntegutbearbeitungseinheit erstreckt und einer sich entlang des Rosts erstreckenden Trägeraufnahme.

Mähdrescher sind große Maschinen, die landwirtschaftlich angebaute Pflanzen ernten, dreschen, trennen und reinigen. Das gewonnene saubere Korn wird in einem am Mähdrescher angeordneten Korntank gelagert. Das saubere Korn kann dann durch einen Entladeschneckenförderer aus dem Korntank auf einen Lastwagen, Korntransportwagen oder anderen Aufnahmebehälter verbracht werden. Es sind drei Grundtypen von Mähdreschern bekannt: (1) konventionelle Mähdrescher, die eine quer angeordnete Dreschtrommel zum Dreschen des Ernteguts und Strohschüttler zum Trennen des ausgedroschenen Ernteguts aufweisen, (2) hybride Mähdrescher, die eine quer angeordnete Dreschtrommel zum Dreschen des Ernteguts und einen oder mehrere innerhalb eines Gehäuses angeordnete Trennrotoren zum Trennen des ausgedroschenen Ernteguts aufweisen, und (3) Rotormähdrescher, die einen innerhalb eines Gehäuses angeordneten Rotor aufweisen, um das geerntete Gut zu dreschen und zu trennen.

Bei konventionellen und hybriden Mähdreschern weist eine Erntegutbearbeitungseinheit eine quer angeordnete Dreschtrommel auf, die in unmittelbarer Nähe zu einem Rost, der als Dreschkorb bezeichnet wird, angeordnet ist. Die drehende Dreschtrommel drischt im Zusammenwirken mit der Dreschtrommel das Erntegut. Der Dreschkorb umfasst in der Regel eine Reihe sich quer erstreckender Leisten, durch die sich axial erstreckende Drähte geführt sind. Ein Dreschkorb dieses Typs bildet einen Rost, durch den der Hauptteil des ausgedroschenen Korns und der Spreu auf einen Sammelzusammenbau fallen, durch den diese zum Reinigungssystem des Mähdreschers gefördert werden. Die US 4 909 772 A und die US 5 024 631 A offenbaren beide einen konventionellen, quer angeordneten Dreschkorb für einen konventionellen Mähdrescher.

Rotormähdrescher sind mit einem Beschickungsabschnitt zum Einziehen von Erntegut aus dem Schrägförderer in die rotierende Erntegutbearbeitungseinheit, einem Dreschabschnitt zum Dreschen des Ernteguts und einem Trennabschnitt zum Trennen des Korns aus dem gedroschenen Erntegut ausgestattet. Die rotierende Erntegutbearbeitungseinheit umfasst einen Rotor, der von einem Gehäuse umgeben ist. Die Unterseite des Gehäuses ist mit einer Reihe an Rosten versehen, durch die das Korn und die Spreu aus dem Gehäuse fallen. Die in der Nachbarschaft des Dreschabschnitts der rotierenden Erntegutbearbeitungseinheit angeordneten Roste umfassen einen Dreschkorb, wie er beispielsweise in der US 4 499 908 A offenbart ist. In dieser Patentschrift ist eine Seite des Dreschkorbs schwenkbar an der Erntegutbearbeitungseinheit angebracht, während die andere Seite verstellbar an der Erntegutbearbeitungseinheit befestigt ist, um den Abstand zwischen dem Dreschkorb und dem Rotor zu verändern.

Erntegut, insbesondere grünes Erntegut und in hohem Volumen einlaufendes Erntegut, tendiert dahin, den Dreschkorb zu verstopfen, so dass das Korn nicht mehr durch den Dreschkorb hindurch gelangen kann, wodurch die Kapazität und das Dreschvermögen reduziert werden. Es ist häufig ein Ausbau des Dreschkorbs vonnöten, um das verstopfte Material zu entfernen. Außerdem besteht bei manchen Rotormähdreschern die Notwendigkeit, zwischen zwei unterschiedlichen Dreschkörben mit unterschiedlichen Öffnungsgrößen zu wechseln, wenn von der Ernte von Erntegut mit kleinen Körnern auf die Ernte großer Körner gewechselt wird oder umgekehrt. Es ist daher wünschenswert, dass Befestigungsmittel für den Dreschkorb eine leichte Anbringung und Abnahme ermöglichen.

Die der Erfindung zu Grunde liegende Aufgabe wird darin gesehen, einen verbesserten Befestigungsmechanismus für einen Rost eines Mähdreschers bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird ein abnehmbarer Befestigungsmechanismus zur schwenkbaren Anbringung eines Rosts an einer Erntegutbearbeitungseinheit einer landwirtschaftlichen Erntemaschine vorgeschlagen, insbesondere eines Mähdreschers. Der Befestigungsmechanismus umfasst einen Trägerbalken an der Erntegutbearbeitungseinheit und eine Trägeraufnahme am Rost. Ein Handgriff fixiert den Trägerbalken und die Trägeraufnahme aneinander, während ein Verriegelungselement den Handgriff an Ort und Stelle hält. Die Trägeraufnahme erstreckt sich an einer Seite des Rostes und weist eine untere Lippe und eine obere Lippe auf. Ein Loch befindet sich in der oberen Lippe, während sich in der unteren Lippe ein Schlitz befindet. Der Handgriff ist ein balkenartiges Element mit einem Körper, einer daran angeordneten Nase und vorzugsweise einem Griffende. Das Verriegelungselement hat einen vorzugsweise halbmondförmigen Körper.

Um den Rost an der Erntegutbearbeitungseinheit anzubringen, wird der Rost an der gewünschten Stelle der Erntegutbearbeitungseinheit angeordnet und dann angehoben, so dass die Trägeraufnahme den Trägerbalken zumindest zum Teil umschließt. Wenn die Trägeraufnahme positioniert ist, wird die Nase des Handgriffs nach oben in das Loch der oberen Lippe der Trägeraufnahme verbracht. Wenn die Nase sich an Ort und Stelle befindet, wird der Körper des Handgriffs in den Schlitz der unteren Lippe bewegt und gegen den Trägerbalken gedrückt, um die Trägeraufnahme weiter gegen den Trägerbalken zu hebeln. Sobald der Handgriff die Trägeraufnahme zumindest näherungsweise in die richtige Position gegenüber dem Trägerbalken verbracht hat, wird das Verriegelungselement an dem Handgriff positioniert, wobei vorzugsweise (aber nicht unbedingt) ein Schlitz des Verriegelungselements den Handgriff umschließt. Dann befindet sich der Körper des Verriegelungselements im Eingriff mit dem Schlitz in der unteren Lippe. Das Verriegelungselement wird dann in den Schlitz in der unteren Lippe getrieben, wodurch der Handgriff arretiert wird. Das Verriegelungselement kann - wie beschrieben - kraftschlüssig, aber auch auf beliebige andere Weise arretiert werden, insbesondere formschlüssig. Um den Rost aus der Erntegutbearbeitungseinheit zu entnehmen, werden die Schritte zur Anbringung des Befestigungsmechanismus in umgekehrter Reihenfolge ausgeführt.

Der Trägerbalken ist vorzugsweise ein zylindrisches Element, das sich entlang der Erntegutbearbeitungseinheit parallel zu einem Erntegutbearbeitungselement erstreckt, beispielsweise einem Rotor.

In den Zeichnungen ist ein nachfolgend näher beschriebenes Ausführungsbeispiel der Erfindung dargestellt. Es zeigt:
- Fig. 1: eine halbschematische Seitenansicht eines selbstfahrenden Mähdreschers mit einer rotierenden Gutbearbeitungseinrichtung,
- Fig. 2: eine perspektivische Ansicht eines erfindungsgemäßen Befestigungsmechanismus, der an der rotierenden Gutbearbeitungseinrichtung des Mähdreschers angebracht ist,
- Fig. 3: eine detaillierte perspektivische Ansicht des Befestigungsmechanismus,
- Fig. 4: einen Schnitt durch den Befestigungsmechanismus, von der Vorderseite des Mähdreschers aus betrachtet, und
- Fig. 5: einen Schnitt durch den Befestigungsmechanismus, von der rechten Seite des Mähdreschers aus betrachtet.

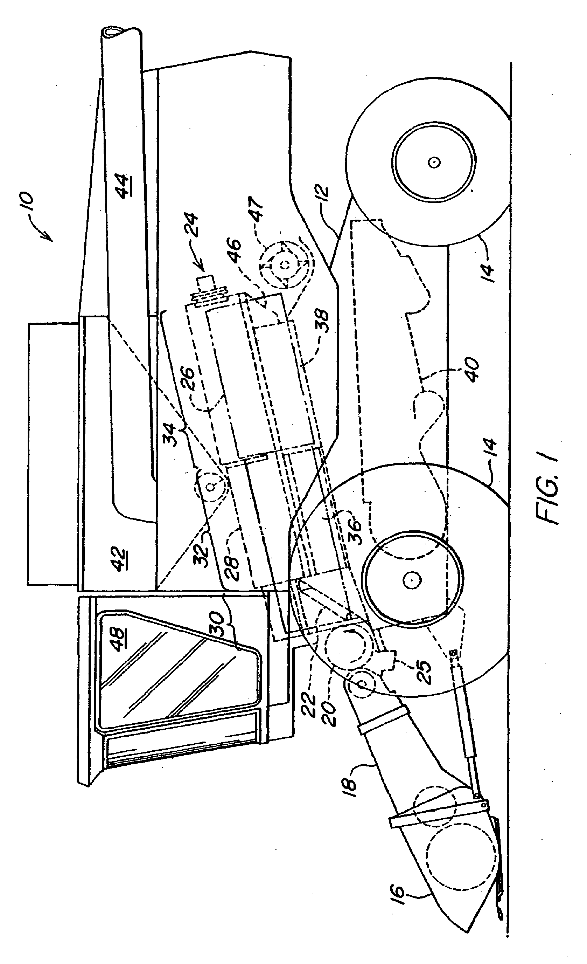

Die Figur 1 zeigt einen Mähdrescher 10, der einen tragenden Aufbau 12 mit im Eingriff mit dem Erdboden befindlichen Rädern 14 aufweist. Ein Erntevorsatz 16 in Form eines Schneidwerks wird verwendet, um Erntegut aufzunehmen und es einem Schrägförderer 18 zuzuführen. Das geerntete Gut wird vom Schrägförderer 18 einer Leittrommel 20 zugeführt. Die Leittrommel 20 führt das Gut nach oben durch einen Einlassübergangsabschnitt 22 einer drehbaren Gutbearbeitungseinrichtung 24 zu. Eine Steinfalle ist zwischen dem Schrägförderer 18 und der Leittrommel 20 angeordnet.

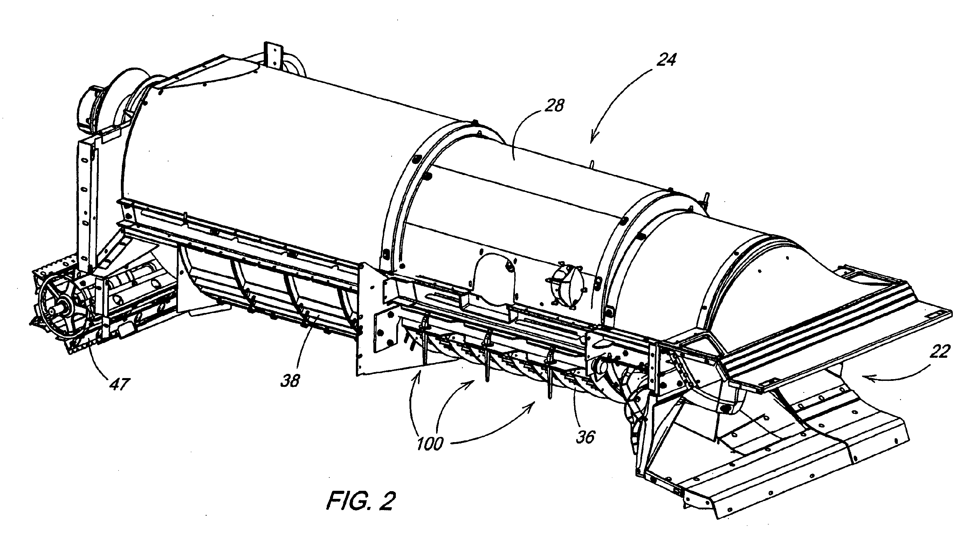

Die Figur 2 zeigt die drehbare Gutbearbeitungseinrichtung 24, die das Erntegut drischt und trennt. Die drehbare Gutbearbeitungseinrichtung 24 umfasst als drehbares Erntegutbearbeitungselement einen Rotor 26, dessen Umfang von einem Gehäuse 26 umschlossen wird. Beide definieren gemeinsam einen Einlassabschnitt 30, einen Dreschabschnitt 32 und einen Trennabschnitt 34. Der Rotor 26 weist eine hohle, zylindrische Trommel auf, die mit einer Vielzahl von Erntegutbearbeitungselementen besetzt ist, die in das Erntegut eingreifen und es im Gehäuse 28 rotativ mitführen. Die Unterseite des Gehäuses 28 weist unter dem Dreschabschnitt 32 einen Rost auf, der als Dreschkorb 36 bezeichnet wird, und ein Trennrost 38 unter dem Trennabschnitt 34.

Korn und Spreu, die durch den Dreschkorb 36 und den Trennrost 38 fallen, werden einem Reinigungssystem 40 zugeführt. Das Reinigungssystem 40 entfernt die Spreu und führt das saubere Korn einem Elevator für sauberes Korn (nicht gezeigt) zu. Der Elevator für sauberes Korn legt das saubere Korn in einem Korntank 42 ab. Das saubere Korn im Korntank 42 kann durch einen Entladeschneckenförderer auf einen Kornwagen, Anhänger oder Lastwagen entladen werden. Gedroschenes und den Trennabschnitt verlassendes Stroh wird durch einen Auslass 46 aus der rotierenden Erntegutbearbeitungseinheit 24 ausgestoßen und einer Fördertrommel 47 zugeführt. Die Fördertrommel 47 stößt das Stroh wiederum an der Rückseite des Mähdreschers 10 aus. Der Betrieb des Mähdreschers 10 wird von der Bedienerkabine 48 aus gesteuert.

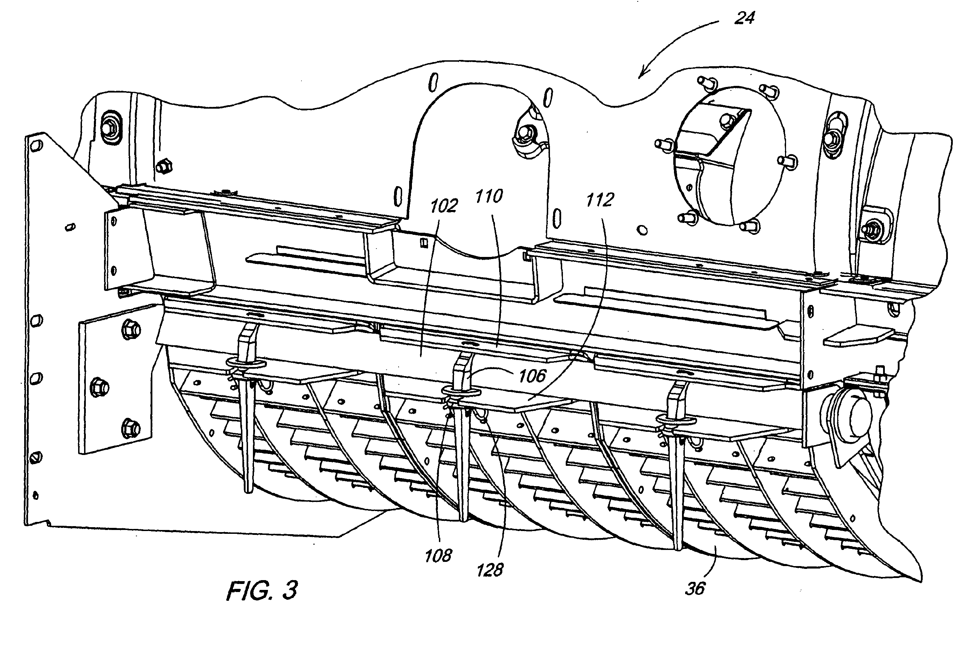

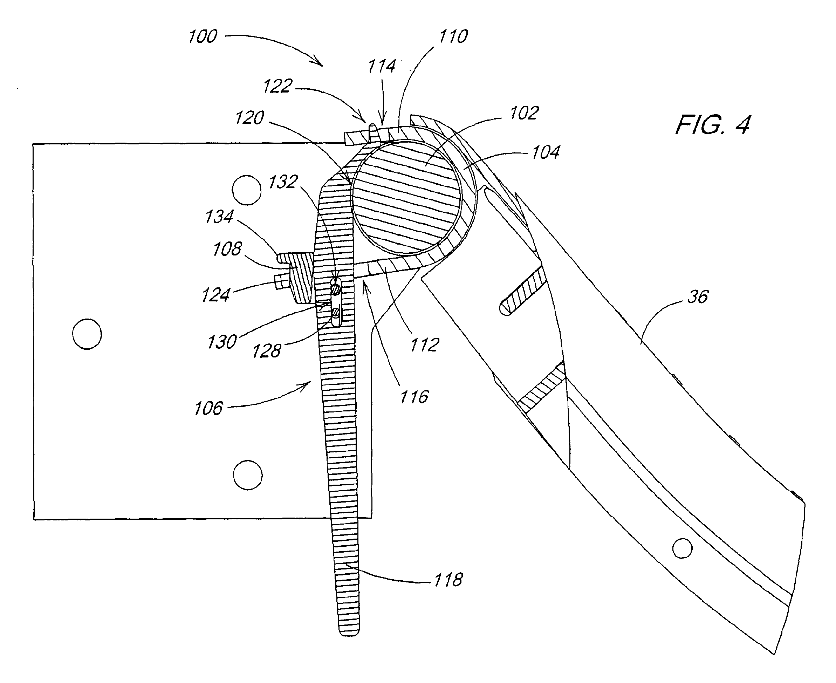

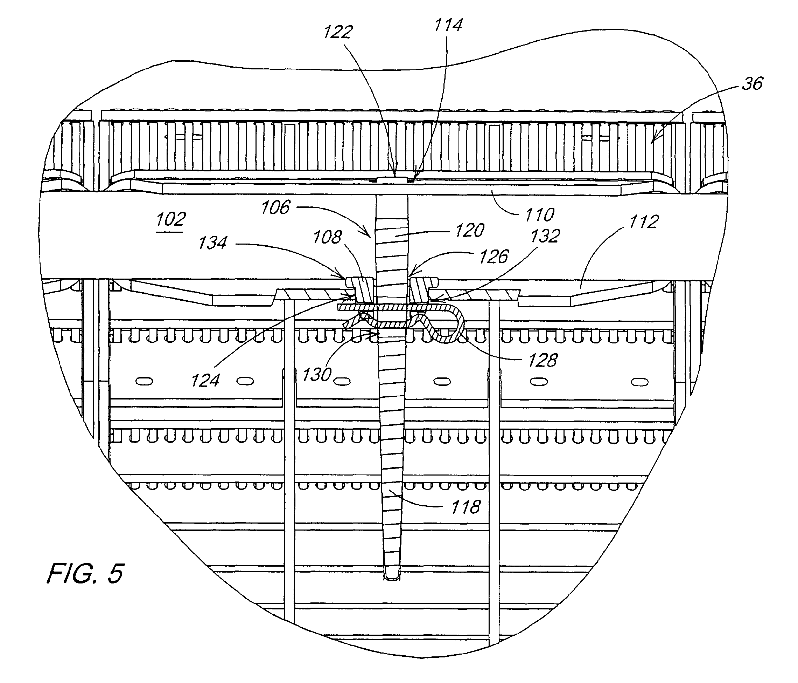

Die Figuren 2 bis 5 zeigen die vorliegende Erfindung, einen Befestigungsmechanismus 100 zur Anbringung eines Rostes an der Erntegutbearbeitungseinheit 24 des Mähdreschers 10. Die dargestellte Ausführungsform zeigt den Befestigungsmechanismus 100, wie er den unter dem Dreschabschnitt 32 angebrachten Dreschkorb 36 an der Erntegutbearbeitungseinheit 24 festhält. Der erfindungsgemäße Befestigungsmechanismus 100 kann auch verwendet werden, um den unter dem Trennabschnitt 34 angeordneten Trennrost 38 an der Erntegutbearbeitungseinheit 24 zu fixieren. Außerdem kann der Befestigungsmechanismus 100 auch zur Anbringung der Dreschkörbe sich quer erstreckender Dreschtrommeln in konventionellen oder hybriden Mähdreschern verwendet werden, oder um die Trennroste der rotierenden Trenneinheit in einem hybriden Mähdrescher anzubringen.

Der Befestigungsmechanismus 100 umfasst einen Trägerbalken 102 an der Erntegutbearbeitungseinheit 24, eine Trägeraufnahme 104 am Dreschkorb 36, einen Handgriff 106, um den Trägerbalken 102 und die Trägeraufnahme 104 aneinander zu befestigen, und ein Verriegelungselement 108, um den Handgriff 106 an Ort und Stelle zu arretieren. Der Trägerbalken 102 ist ein zylindrisches Element, das sich parallel zu Rotor 26 entlang der Erntegutbearbeitungseinheit 24 erstreckt. Die Trägeraufnahme 104 erstreckt sich entlang der rechten Seite des Dreschkorbs 36 und weist eine obere Lippe 110 und eine untere Lippe 112 auf. Ein Loch 114 ist in der oberen Lippe 110 angeordnet, während ein Halteschlitz 116 in der unteren Lippe 112 angebracht ist. Der Handgriff 106 ist ein balkenartiges Element mit einem Griffende 118, einem Körper 120 und einer Nase 122. Das Verriegelungselement 108 ist ein mondförmiges Element mit einem Körper 124 und einem Schlitz 126. Sowohl der Handgriff 106 als auch das Verriegelungselement 108 ist in der dargestellten Ausführungsform aus einer Stahllegierung gegossen.

Um den Dreschkorb 36 an der Erntegutbearbeitungseinheit 24 anzubringen, wird der Dreschkorb 36 an einer gewünschten Stelle in Längsrichtung der Erntegutbearbeitungseinheit 24 positioniert und dann angehoben, so dass die Trägeraufnahme 104 den Trägerbalken 102 umschließt. Wenn die Trägeraufnahme 104 positioniert ist, wird die Nase 122 des Handgriffs 106 nach oben in das Loch 114 eingeführt. Wenn die Nase 122 positioniert ist, wird der Körper 120 mittels des Griffendes 118 auf den Trägerbalken 102 zu bewegt, wobei der Körper 120 in den Schlitz 116 an der unteren Lippe 112 eindringt, und gegen den Trägerbalken 102 gedrückt, um die Trägeraufnahme 104 weiter gegen den Trägerbalken 102 zu hebeln. Sobald der Handgriff 106 die Trägeraufnahme 104 im Wesentlichen am Trägerbalken 102 zum Anliegen gebracht hat, wird das Verriegelungselement 108 an Handgriff 106 in Anlage gebracht, so dass der Schlitz 126 des Verriegelungselements 108 den Körper 120 umschließt und der Körper 124 des Verriegelungselements 108 am Schlitz 116 in der unteren Lippe 112 anliegt. Das Verriegelungselement 108 wird dann in den Schlitz 116 gezwängt, so dass der Handgriff 106 an Ort und Stelle gehalten wird. In der dargestellten Ausführungsform kann ein Hammer verwendet werden, um das Verriegelungselement 108 in seine Position zu zwingen.

In der dargestellten Ausführungsform wird außerdem ein Haltestift 128 verwendet, um das Verriegelungselement 108 am Handgriff 106 zu fixieren. Der Haltestift 128 wird sowohl durch ein Haltestiftloch 132 am Verriegelungselement 108 als auch durch ein Haltestiftloch 130 im Handgriff 106 gesteckt. Außerdem umfasst die dargestellte Ausführungsform einen Anschlag 134 am Verriegelungselement 108. Der Anschlag 134 ist größer als die Öffnung des Schlitzes 116 des Verriegelungselements 108, so dass verhindert ist, dass das Verriegelungselement 108 während des Zusammenbaus über den Schlitz 116 hinaus gedrückt wird.

Sobald der Dreschkorb 36 durch den Befestigungsmechanismus 100 gesichert ist, kann der Dreschkorb 36 um den Trägerbalken 102 nach oben in Richtung auf den Rotor 26 zu gedreht werden, um ihn an der Seite des Dreschkorbs 36, die dem Befestigungsmechanismus 100 gegenüberliegt, an der Erntegutbearbeitungseinheit 24 anzubringen. Es sind verschiedene Anbringungsmöglichkeiten an dieser Seite denkbar, einschließlich einer direkten Anbringung an der Erntegutbearbeitungseinheit 24 durch Befestigungselemente und einer Anbringung an einem verstellbaren Mechanismus (nicht gezeigt) an der Erntegutbearbeitungseinheit 24, die eingerichtet ist, den freien Abstand zwischen dem Dreschkorb 36 und dem Rotor 26 zu verändern. Um den Dreschkorb 36 von der Erntegutbearbeitungseinheit 24 abzunehmen, wird der Dreschkorb 36 zunächst an der Seite der Erntegutbearbeitungseinheit 24, die dem Befestigungsmechanismus 100 gegenüberliegt, von der Erntegutbearbeitungseinheit 24 getrennt. Die Schritte zur Anbringung des Befestigungsmechanismus 100 werden dann in umgekehrter Reihenfolge durchgeführt.

## Patentansprüche

1. Befestigungsmechanismus (100) zur Anbringung eines Rosts, insbesondere eines Dreschkorbs (36), an einer Erntegutbearbeitungseinheit (24), mit einem Trägerbalken (102), der sich entlang der Erntegutbearbeitungseinheit (24) erstreckt und einer sich entlang des Rosts erstreckenden Trägeraufnahme (104), **dadurch gekennzeichnet, dass** die Trägeraufnahme (104) eine obere Lippe (110) mit einem Loch (114) und eine untere Lippe (112) mit einem Schlitz (116) aufweist, dass der Trägerbalken (102) von der Trägeraufnahme (104) zumindest teilweise umschlossen ist, wenn der Rost durch den Befestigungsmechanismus (100) an der Erntegutbearbeitungseinheit (24) befestigt ist, dass ein Handgriff (106) vorgesehen ist, der einen Körper (120) und eine Nase (122) umfasst, dass die Nase (122) in das Loch (114) der oberen Lippe (110) der Trägeraufnahme (104) einführbar ist, dass der Körper (120) des Handgriffs (106) am Trägerbalken (102) anliegt, wenn der Rost durch den Befestigungsmechanismus (100) an der Erntegutbearbeitungseinheit (24) befestigt ist, und dass ein Verriegelungselement (108) mit einem Körper (124) vorhanden ist, der sich in den Schlitz (116) der unteren Lippe (112) erstreckt, durch den sich auch der Körper (120) erstreckt, wenn der Rost durch den Befestigungsmechanismus (100) an der Erntegutbearbeitungseinheit (24) befestigt ist.

2. Befestigungsmechanismus (100) nach Anspruch 1, **dadurch gekennzeichnet, dass** ein Haltestift (128) zur Befestigung des Verriegelungselements (108) vorgesehen ist, der sich durch ein Haltestiftloch (132) am Verriegelungselement (108) und durch ein Haltestiftloch (130) im Handgriff (106) erstreckt, wenn der Rost durch den Befestigungsmechanismus (100) an der Erntegutbearbeitungseinheit (24) befestigt ist.

3. Befestigungsmechanismus (100) nach Anspruch 1 oder 2, **dadurch gekennzeichnet, dass** der Trägerbalken (102) parallel zur drehbaren Erntegutbearbeitungseinheit (24) orientiert ist.

4. Befestigungsmechanismus (100) nach einem der Ansprüche 1 bis 3, **dadurch gekennzeichnet, dass** der Trägerbalken (102) zylindrisch ist und die Trägeraufnahme (104) konkav, wobei der Befestigungsmechanismus (100) derart geformt ist, dass der Rost gegenüber der Erntegutbearbeitungseinheit (24) schwenkbar ist.

5. Befestigungsmechanismus nach einem der Ansprüche 1 bis 4, **dadurch gekennzeichnet, dass** das Verriegelungselement (108) einen Anschlag (134) aufweist, der an der unteren Lippe (112) der Trägeraufnahme (104) zum Anliegen kommt, wenn der Rost durch den Befestigungsmechanismus (100) an der Erntegutbearbeitungseinheit (24) befestigt ist.

6. Erntegutbearbeitungseinheit (24) mit einem Rost, der durch einen Befestigungsmechanismus (100) nach einem der vorhergehenden Ansprüche an der Erntegutbearbeitungseinheit (24) befestigt ist.

7. Mähdrescher (10) mit einer Erntegutbearbeitungseinheit (24) nach Anspruch 6.

## Claims

1. Fastening mechanism (100) for the attachment of a grate, in particular a thresher concave (36), to a crop processing unit (24), having a supporting beam (102), which extends along the crop processing unit (24) and a supporting fixture (104) extending along the grate, **characterized in that** the supporting fixture (104) has an upper lip (110) with a hole (114) and a lower lip (112) with a slot (116), **in that** the supporting beam (102) is at least partially enclosed by the supporting fixture (104) once the grate is fastened by the fastening mechanism (100) to the crop processing unit (24), **in that** a handle (106) is provided, which comprises a body (120) and a boss (122), **in that** the boss (122) can be introduced into the hole (114) in the upper lip (110) of the supporting fixture (104), **in that** the body (120) of the handle (106) bears against the supporting beam (102) once the grate is fastened by the fastening mechanism (100) to the crop processing unit (24), and **in that** a locking element (108) with a body (124) is present, which extends into the slot (116) in the lower lip (112), through which the body (120) also extends once the grate is fastened by the fastening mechanism (100) to the crop processing unit (24).

2. Fastening mechanism (100) according to Claim 1, **characterized in that** a retaining pin (128) is provided for the fastening of the locking element (108), which retaining pin extends through a retaining pin hole (132) on the locking element (108) and through a retaining pin hole (130) in the handle (106) once the grate is fastened by the fastening mechanism (100) to the crop processing unit (24).

3. Fastening mechanism (100) according to Claim 1 or 2, **characterized in that** the supporting beam (102) is orientated parallel to the rotatable crop processing unit (24).

4. Fastening mechanism (100) according to one of Claims 1 to 3, **characterized in that** the supporting beam (102) is cylindrical and the supporting fixture (104) concave, the fastening mechanism (100) being shaped such that the grate is pivotable relative to the crop processing unit (24).

5. Fastening mechanism according to one of Claims 1 to 4, **characterized in that** the locking element (108) has a stop (134), which comes to bear against the lower lip (112) of the supporting fixture (104) once the grate is fastened by the fastening mechanism (100) to the crop processing unit (24).

6. Crop processing unit (24) having a grate which is fastened to the crop processing unit (24) by a fastening mechanism (100) according to one of the preceding claims.

7. Combine harvester (10) having a crop processing unit (24) according to Claim 6.

## Revendications

1. Mécanisme de fixation (100) destiné au montage d'une grille, en particulier un contre-batteur (36), sur une unité de traitement de la récolte (24), comportant une barre de support (102), qui s'étend le long de l'unité de traitement de la récolte (24), et un logement de support (104) qui s'étend le long de la grille, **caractérisé en ce que** le logement de support (104) comporte une lèvre supérieure (110) avec un trou (114) et une lèvre inférieure (112) avec une fente (116), **en ce que** la barre de support (102) est entourée au moins en partie par le logement de support (104) lorsque la grille est fixée par le mécanisme de fixation (100) contre l'unité de traitement de la récolte (24), **en ce qu'**il est prévu une poignée (106) qui comporte un corps (120) et un bec (122), **en ce que** le bec (122) peut être introduit dans le trou (114) de la lèvre supérieure (110), **en ce que** le corps (120) de la poignée (106) est en appui contre la barre de support (102) lorsque la grille est fixée par le mécanisme de fixation (100) contre l'unité de traitement de la récolte (24), et **en ce qu'**il est prévu un élément de verrouillage (108) avec un corps (124) qui passe à travers la fente (116) de la lèvre inférieure (112), à travers laquelle passe également le corps (120) lorsque la grille est fixée par le mécanisme de fixation (100) contre l'unité de traitement de la récolte (24).

2. Mécanisme de fixation (100) selon la revendication 1, **caractérisé en ce que**, pour la fixation de l'élément de verrouillage (108), il est prévu un tenon de fixation (128) qui passe à travers un trou (132) ménagé dans l'élément de verrouillage (108) et à travers un trou (130) ménagé dans la poignée (106), lorsque la grille est fixée par le mécanisme de fixation (100) contre l'unité de traitement de la récolte (24).

3. Mécanisme de fixation (100) selon la revendication 1 ou 2, **caractérisé en ce que** la barre de support (102) est orientée parallèlement à l'unité de traitement de la récolte (24) rotative.

4. Mécanisme de fixation (100) selon l'une quelconque des revendications 1 à 3, **caractérisé en ce que** la barre de support (102) est cylindrique et le logement de support (104) est concave, le mécanisme de fixation (100) étant formé de telle sorte que la grille est apte à pivoter par rapport à l'unité de traitement de la récolte (24).

5. Mécanisme de fixation (100) selon l'une quelconque des revendications 1 à 4, **caractérisé en ce que** l'élément de verrouillage (108) comporte une butée (134), qui vient en appui contre la lèvre inférieure (112) du logement de support (104) lorsque la grille est fixée par le mécanisme de fixation (100) contre l'unité de traitement de la récolte (24).

6. Unité de traitement de la récolte (24) comportant une grille qui est fixée par un mécanisme de fixation (100) selon une des revendications précédentes contre l'unité de traitement de la récolte (24).

7. Moissonneuse-batteuse (10) comportant une unité de traitement de la récolte (24) selon la revendication 6.
